# EUROPÄISCHE PATENTANMELDUNG

(11) **EP 3 614 280 A1**
(43) Veröffentlichungstag der Anmeldung: **26.02.2020**
(21) Anmeldenummer: 18189781.0
(22) Anmeldetag: 20.08.2018
(51) Int. Cl.: G06F 17/27

(54) **BESTIMMEN EINES ERGEBNISWERTS EINER UNIFORM RESOURCE IDENTIFIER-, URI, ZEICHENFOLGE**

(71) Anmelder: Siemens Aktiengesellschaft, 80333 München (DE)
(72) Erfinder: Fuchs, Karl Peter, 80992 München (DE); Geipel, Markus Michael, 80799 München (DE); Pospisil, Jan, 91058 Erlangen (DE); Störmann, Christof, 81739 München (DE)

(57) **Zusammenfassung**

Die Erfindung betrifft ein Verfahren zum Bestimmen eines Ergebniswerts einer Uniform Resource Identifier-, URI, Zeichenfolge, wobei die URI-Zeichenfolge eine Mehrzahl von Zeichen zum Identifizieren einer Ressource aufweist, aufweisend die Schritte Empfangen der URI-Zeichenfolge; Bestimmen mindestens einer zugehörigen Übergangswahrscheinlichkeit für jedes Zeichen der Mehrzahl der Zeichen der URI-Zeichenfolge auf Basis eines Wahrscheinlichkeitsmodells; und Bestimmen eines Ergebniswerts der URI-Zeichenfolge durch Aggregieren der jeweiligen Übergangswahrscheinlichkeiten. Ferner ist die Erfindung auf eine entsprechende Bestimmungseinheit und Computerprogrammprodukt gerichtet.

## Beschreibung

### 1. Technisches Gebiet

Die Erfindung betrifft ein computer-implementiertes Verfahren zum Bestimmen eines Ergebniswerts einer Uniform Resource Identifier-, URI, Zeichenfolge. Ferner ist die Erfindung auf eine entsprechende Bestimmungseinheit und Computerprogrammprodukt gerichtet. Die Erfindung kann insbesondere in den technischen Bereichen der Artificial Intelligence und der Datenanalyse angesiedelt sein.

### 2. Stand der Technik

URIs sind aus dem Stand der Technik bekannt und sind einheitliche Bezeichner einer Ressource. Mit anderen Worten, ist eine URI-Zeichenfolge ein Identifikator oder Identifizierungskennzeichen. Sie weist eine Zeichenfolge auf, welche der Identifizierung einer Ressource dient. Beispielhafte Ressourcen sind Webseiten und Dateien. Die URI-Zeichenfolge weist eine beliebige Anzahl an Zeichen auf. Üblicherweise weist die URI-Zeichenfolge ferner einen bestimmten Aufbau auf. Sie weist unterschiedliche Bestandteile auf, wie Schema oder Protokoll, Anbieter oder Server, Pfad etc.

Eine untypische URI deutet auf eine Erzeugung durch einen Angreifer oder sonstigen Angriff hin und steht somit im Verdacht unecht oder schadhaft zu sein. Daher ist es wünschenswert diese untypischen URI-Zeichenfolgen rechtzeitig und zuverlässig zu erkennen, um jegliche nachteiligen Folgen in einem Computernetzwerk zu verhindern.
Bekannte Ansätze benötigen jedoch einen bekannten Datensatz mit URI-Zeichenfolgen, welche bereits als untypisch erkannt bzw. gekennzeichnet wurden. Anhand dieser untypischen URI-Zeichenfolgen werden Regeln abgeleitet, um zugehörige Muster oder Bestandteile wiederzuerkennen. Der Datensatz sowie die Regeln sind jedoch schnell überholt. Folglich können neue Datensätze mit untypischen URI-Zeichenfolgen, welche abweichende oder unbekannte Muster aufweisen, nicht rechtzeitig erkannt werden.

Die vorliegende Erfindung stellt sich daher die Aufgabe ein Verfahren zum Bestimmen eines Ergebniswerts einer Uniform Resource Identifier-, URI, Zeichenfolge bereitzustellen, welches effizient und zuverlässig ist.

### 3. Zusammenfassung der Erfindung

Die oben genannte Aufgabe wird erfindungsgemäß durch ein Verfahren zum Bestimmen eines Ergebniswerts einer Uniform Resource Identifier-, URI, Zeichenfolge gelöst, wobei
die URI-Zeichenfolge eine Mehrzahl von Zeichen zum Identifizieren einer Ressource aufweist, aufweisend die Schritte:
a. Empfangen der URI-Zeichenfolge;
b. Bestimmen mindestens einer zugehörigen Übergangswahrscheinlichkeit für jedes Zeichen der Mehrzahl der Zeichen auf Basis eines Wahrscheinlichkeitsmodells; und
c. Bestimmen eines Ergebniswerts der URI-Zeichenfolge durch Aggregieren der jeweiligen Übergangswahrscheinlichkeiten.

Dementsprechend ist die Erfindung auf ein Verfahren zum Bestimmen eines Ergebniswerts einer URI-Zeichenfolge gerichtet. Der Ergebniswert kann auch als Score bezeichnet werden und ist eine Bewertung, die durch eine Zahl darstellbar ist.

In einem ersten Schritt wird die URI-Zeichenfolge empfangen. Die URI-Zeichenfolge kann über eine oder mehrere Schnittstellen durch die unten stehende Bestimmungseinheit empfangen werden, wie autonome Einheit, sonstige Softwareeinheit oder Recheneinheit. Die URI-Zeichenfolge kann beispielsweise mittels dem untenstehenden Proxy-Server oder einem anderen Server protokolliert und von diesem empfangen werden.

Nach deren Empfang wird in einem zweiten Schritt eine zugehörige Übergangswahrscheinlichkeit für jedes Zeichen der Mehrzahl der Zeichen auf Basis eines Wahrscheinlichkeitsmodells bestimmt. Folglich wird den einzelnen Zeichen der URI-Zeichenfolge ein entsprechender Wahrscheinlichkeitswert zugeordnet. Die jeweiligen bzw. einzelnen Übergangswahrscheinlichkeiten der Zeichen der URI-Zeichenfolge können auch als Einzelwahrscheinlichkeiten betrachtet werden. Die jeweilige Übergangswahrscheinlichkeit gibt einen Hinweis auf die Wahrscheinlichkeit, dass das betrachtete Zeichen unter Berücksichtigung der vorangegangenen Zeichen auftritt bzw. vorkommt. Das betrachtete Zeichen ist dasjenige Zeichen, welchem die Wahrscheinlichkeit zugeordnet wird.

In einem dritten Schritt werden die bestimmten Übergangswahrscheinlichkeiten der Zeichen zu einem Ergebniswerts der URI-Zeichenfolge aggregiert. Der Ergebniswert gibt einen Hinweis auf die Wahrscheinlichkeit, dass die URI-Zeichenfolge auftritt bzw. vorkommt. Anhand des Ergebniswerts kann ermittelt werden, ob die URI-Zeichenfolge für eine gegebene Anwendung typisch ist. Eine untypische URI-Zeichenfolge deutet auf eine Erzeugung durch einen Angreifer oder sonstigen Angriff hin und steht somit im Verdacht unecht oder schadhaft zu sein.

Im Gegensatz zum Stand der Technik wird die Echtheit der URI-Zeichenfolge vorteilhafterweise alleine anhand des Wahrscheinlichkeitsmodells festgestellt. URI-Zeichenfolgen, welche bereits als unecht eingestuft wurden, werden bei dieser Feststellung nicht benötigt. Weitere komplexe und zeitintensive Ansätze, wie Feature Engineering oder Syntax Parsing, können ebenfalls vermieden werden. Daraus ergibt sich der Vorteil, dass die Erkennung der URI-Zeichenfolge als unecht im Gegensatz zum Stand der Technik schneller und zuverlässiger erfolgt.

Ferner wird das zugrundeliegende Wahrscheinlichkeitsmodell nicht speziell auf Basis der bekannten untypischen URI-Zeichenfolgen erzeugt, sondern anhand beliebiger protokollierter URI-Zeichenfolgen. Die URI-Zeichenfolgen müssen somit nicht als unecht eingestuft oder anderweitig klassifiziert sein. Der Vorteil, der sich daraus ergibt, ist die Erkennung neuer Angriffsmuster bzw. URI-Muster.

Der Vorteil liegt ferner darin, dass die Erkennung im Gegensatz zum Stand der Technik selbständig oder eigenständig durch die Bestimmungseinheit in effizienter Weise durchgeführt wird. Dadurch kann Personal sowie Zeit eingespart werden. Weiterhin ist die Bestimmungseinheit vorteilhafterweise weniger fehleranfällig und somit zuverlässiger. Beispielhafte Anwendungen des erfindungsgemäßen Verfahrens sind Malware Detektion und Cyber-Security.

In einer Ausgestaltung ist das URI ein Uniform Resource Locator, URL, oder ein Uniform Resource Name, URN. Dementsprechend können vorteilhafterweise beliebige Formen oder Arten der URI als Eingabedatensatz empfangen und durch das erfindungsgemäße Verfahren verarbeitet werden. Dadurch kann vorteilhafterweise abhängig von der Anwendung, der Nutzeranforderung oder sonstigen Bedingungen flexibel die URI-Form angepasst werden.

In einer weiteren Ausgestaltung wird das Wahrscheinlichkeitsmodell durch
- Sammeln einer Mehrzahl von URI-Zeichenfolgen und/oder zugehöriger Datensätze; und
- Anwenden eines Recurrent Neural Networks, RNN, oder eines Sequence Memoizers auf die Mehrzahl der URI-Zeichenfolgen erzeugt.

Dementsprechend kann das Wahrscheinlichkeitsmodell mithilfe unterschiedlicher Ansätze erzeugt werden. Das zugrundeliegende Wahrscheinlichkeitsmodell wird nicht auf Basis der als unecht eingestuften URI-Zeichenfolgen erzeugt, sondern beliebiger protokollierter URI-Zeichenfolgen. Dadurch kann vorteilhafterweise abhängig von der Anwendung, der Nutzeranforderung oder sonstigen Bedingungen flexibel der Ansatz angepasst werden.

Die empfangene oder betrachtete URI-Zeichenfolge ist nicht Bestandteil der Mehrzahl der URI-Zeichenfolgen, welche für die Modellerzeugung verwendet werden.

In einer weiteren Ausgestaltung wird die Mehrzahl der URI-Zeichenfolgen durch einen Proxy Server, eine PCAP-Sensor oder einer sonstigen Einheit gesammelt. Dementsprechend können die URI-Zeichenfolgen vorteilhafterweise durch eine beliebige Sammeleinheit gesammelt werden, wie protokolliert und/oder gespeichert werden. Zusätzlich können weitere zugehörige Datensätze durch die gleiche oder eine andere Sammeleinheit gesammelt werden. Die weiteren zugehörigen Datensätze können die Größe der gesendeten und empfangenen Daten, Details zum Übertragungsprotokoll, wie http Header, IP Nummer des Senders und/oder IP Nummer des Empfängers umfassen. Die zusätzlichen zugehörigen Daten können vorteilhafterweise in die Modellerzeugung mit einfließen.

In einer weiteren Ausgestaltung umfasst das Aggregieren das Multiplizieren, das Berechnen eines arithmetischen oder eines geometrischen Mittels der jeweiligen Übergangswahrscheinlichkeiten. Dementsprechend kann der Ergebniswert auf unterschiedliche Art und Weise aus den Einzelwahrscheinlichkeiten berechnet werden, insbesondere durch Multiplikation. Der Ergebniswert kann in diesem Fall auch als Gesamtwahrscheinlichkeit betrachtet werden. Alternativ kann eine andere Aggregation der Einzelwahrscheinlichkeiten, wie arithmetisches Mittel oder geometrisches Mittel verwendet werden.

In einer weiteren Ausgestaltung, falls der Ergebniswert einen vorbestimmten Schwellwert überschreitet, wird die URI-Zeichenfolge als typisch eingestuft; und
andernfalls als untypisch eingestuft.

Dementsprechend kann anhand des Ergebniswerts und dessen Überschreitung eines Schwellwerts die Echtheit der URI-Zeichenfolge festgestellt werden. Der Schwellwert kann auch als Grenzwert bezeichnet werden und die Feststellung als Detektion oder Erkennung. Echt oder Typisch bedeutet, dass die URI-Zeichenfolge keinem Angriff zugeordnet wird, siehe weiter oben.

In einer weiteren Ausgestaltung weist das Verfahren weiterhin das Übertragen einer Nachricht mit dem Ergebniswert und/oder zugehöriger Datensätze an eine andere Einheit oder Person; und/oder Einleiten einer Maßnahme auf.

In einer weiteren Ausgestaltung berücksichtigt die Nachricht die Einstufung.

Ferner betrifft die Erfindung eine Bestimmungseinheit zum Durchführen des obigen Verfahrens. Die Einheit kann als autonome Einheit, Recheneinheit, Steuereinheit oder sonstige Einheit ausgebildet sein.

Dementsprechend wird das erfindungsgemäße Verfahren durch eine Bestimmungseinheit durchgeführt. Zusätzlich zur Feststellung der Echtheit kann die Bestimmungseinheit eine oder mehrere Maßnahmen einleiten. Die Bestimmungseinheit kann hierzu einen oder mehrere Schritte gleichzeitig oder nacheinander durchführen. Ferner kann die Bestimmungseinheit auch stufenweise vorgehen.

Sie kann die Einstufung melden, beispielsweise durch Übertragung einer entsprechenden Nachricht oder Mitteilung an eine andere Einheit, wie ein Endgerät, eine Steuereinheit oder sonstige Recheneinheit, welche eine entsprechende Maßnahme ergreift. Alternativ oder zusätzlich kann die autonome Einheit auch selbst ohne eine andere Einheit eine entsprechende Maßnahme einleiten. Die Maßnahmen können das Blockieren der untypischen URI-Zeichenfolge, das Setzen der untypischen URI-Zeichenfolge auf eine schwarze Liste ("Blacklist"), das Senden einer Meldung an Experten, insbesondere für eine spätere Nachforschung, das Erfassen der untypischen URI-Zeichenfolge, um erst bei mehrmaligem auftreten eine Maßnahme einzuleiten, und das Analysieren der untypischen URI-Zeichenfolge umfassen.

Die Erfindung betrifft ferner ein Computerprogrammprodukt mit einem Computerprogramm, das Mittel zur Durchführung des oben beschriebenen Verfahrens, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.
- FIG 1: zeigt ein schematisches Ablaufdiagramm des erfindungsgemäßen Verfahrens.
- FIG 2: zeigt eine URI-Zeichenfolge gemäß einer Ausführungsform der Erfindung.

### 5. Beschreibung der bevorzugten Ausführungsformen

Im Folgenden werden bevorzugte Ausführungsformen der vorliegenden Erfindung in Bezug auf die Figuren beschrieben.

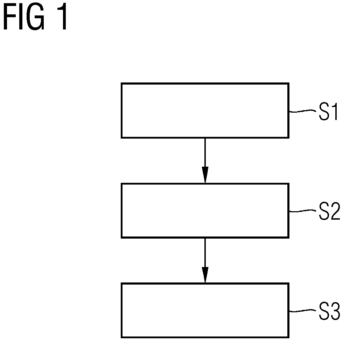

Figur 1 stellt ein Ablaufdiagramm des erfindungsgemäßen Verfahrens mit den Verfahrensschritten S1 bis S3 schematisch dar. Die einzelnen Verfahrensschritte können jeweils durch die Bestimmungseinheit oder auch deren Untereinheiten durchgeführt werden.

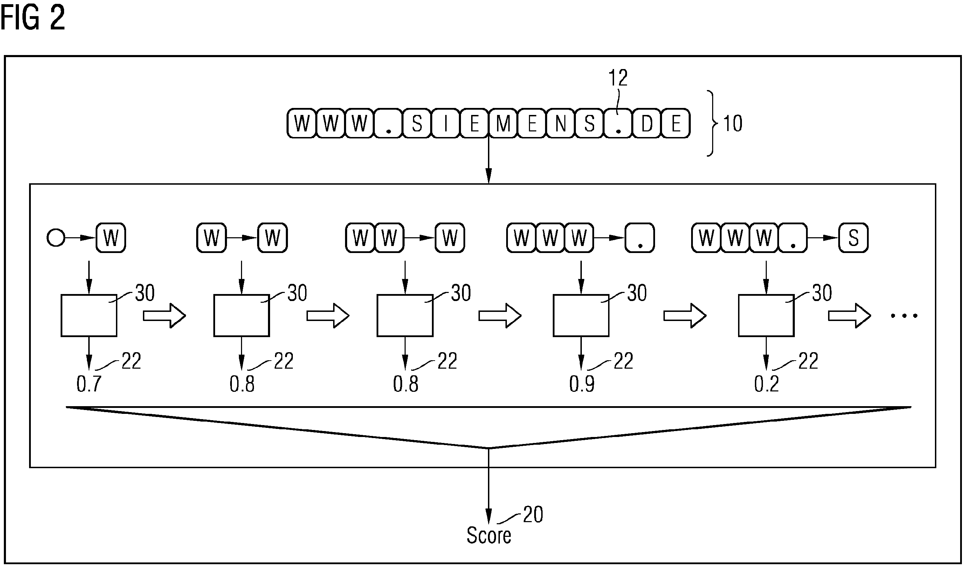

Figur 2 zeigt eine beispielhafte URI-Zeichenfolge 10. Die URI-Zeichenfolge 10 ist der Eingabedatensatz für die Bestimmung des Ergebniswerts 20 der URI-Zeichenfolge 10. Bei der Bestimmung werden zunächst die Einzelwahrscheinlichkeiten 22 der Zeichen 12 der URI-Zeichenfolge 10 bestimmt und aus diesen anschließend der Ergebniswert 20 der URI-Zeichenfolge 10 bestimmt. Die Bestimmung erfolgt auf Basis eines Wahrscheinlichkeitsmodells 30. Der Ergebniswert 20 kann in einem weiteren Schritt zur Einstufung der URI-Zeichenfolge 10 in untypisch oder untypisch verwendet werden (nicht gezeigt). Der Ausgabedatensatz ist somit der Ergebniswert, wie Gesamtwahrscheinlichkeit oder Score. Um unnötige Wiederholgen zu vermeiden wird für weitere Details auf die obigen Ausführungen verwiesen.

### Bezugszeichenliste

- 10: URI-Zeichenfolge
- 12: URI-Zeichen der URI-Zeichenfolge
- 20: Ergebniswert
- 22: Übergangswahrscheinlichkeit oder Einzelwahrscheinlichkeit
- 30: Wahrscheinlichkeitsmodell
- S1 bis S3: Verfahrensschritte

## Patentansprüche

1. Verfahren zum Bestimmen eines Ergebniswerts einer Uniform Resource Identifier-, URI, Zeichenfolge (10), wobei
die URI-Zeichenfolge (10) eine Mehrzahl von Zeichen (12) zum Identifizieren einer Ressource aufweist, aufweisend die Schritte:
a. Empfangen der URI-Zeichenfolge (10, S1) ;
b. Bestimmen mindestens einer zugehörigen Übergangswahrscheinlichkeit (22) für jedes Zeichen (12) der Mehrzahl der Zeichen (12) der URI-Zeichenfolge (10) auf Basis eines Wahrscheinlichkeitsmodells (30, S2); und
c. Bestimmen eines Ergebniswerts (20) der URI-Zeichenfolge (10) durch Aggregieren der jeweiligen Übergangswahrscheinlichkeiten (22, S3).

2. Verfahren nach Anspruch 1, wobei das URI ein Uniform Resource Locator, URL, oder ein Uniform Resource Name, URN, ist.

3. Verfahren nach Anspruch 1 oder Anspruch 2, wobei das Wahrscheinlichkeitsmodell (30) durch
- Sammeln einer Mehrzahl von URI-Zeichenfolgen (10) und/oder zugehöriger Datensätze; und
- Anwenden eines Recurrent Neural Networks, RNN, oder eines Sequence Memoizers auf die Mehrzahl der URI-Zeichenfolgen (10) erzeugt wird.

4. Verfahren nach Anspruch 3, wobei die Mehrzahl der URI-Zeichenfolgen (10) durch einen Proxy Server, eine PCAP-Sensor oder einer sonstigen Einheit gesammelt werden.

5. Verfahren nach einem der vorhergehenden Ansprüche, wobei das Aggregieren das Multiplizieren, das Berechnen eines arithmetischen oder eines geometrischen Mittels der jeweiligen Übergangswahrscheinlichkeiten (22) umfasst.

6. Verfahren nach einem der vorhergehenden Ansprüche, falls der Ergebniswert (20) einen vorbestimmten Schwellwert überschreitet, die URI-Zeichenfolge (10) als typisch eingestuft wird; und
andernfalls als untypisch eingestuft wird.

7. Verfahren nach einem der vorhergehenden Ansprüche, weiterhin aufweisend
- Übertragen einer Nachricht mit dem Ergebniswert (20) und/oder zugehöriger Datensätze an eine andere Einheit oder Person; und/oder
- Einleiten einer Maßnahme.

8. Verfahren nach Anspruch 6 und 7, wobei die Nachricht die Einstufung berücksichtigt.

9. Bestimmungseinheit zum Durchführen des Verfahrens nach einem der vorhergehenden Ansprüche.

10. Computerprogrammprodukt mit einem Computerprogramm, das Mittel zur Durchführung des Verfahrens nach einem der Ansprüche 1 bis 8 aufweist, wenn das Computerprogramm auf einer programmgesteuerten Einrichtung zur Ausführung gebracht wird.
